# DEMANDE DE BREVET EUROPEEN

(11) **EP 0 998 065 A1**
(43) Date de publication de la demande: **03.05.2000**
(21) Numéro de dépôt: 99402640.9
(22) Date de dépôt: 25.10.1999
(51) Int. Cl.: H04B 7/26, H04J 11/00, H04J 3/06

(54) **Canal module d'acquisition et de poursuite pour un systeme de radiocommunications**

(30) Priorité: 26.10.1998 FR 9813374
(71) Demandeur: ALCATEL, 75008 Paris (FR)
(72) Inventeur: Cohen, Michel, 75011 Paris (FR); Lemois, Emmanuel, 75005 Paris (FR); Cuvelier, Laurent, 1450 Gentinnes (BE)
(74) Mandataire: Smith, Bradford Lee

(57) **Abrégé**

L'invention propose, dans un système de radiocommunications, présentant des canaux physiques avec chacun au moins un canal logique, de transmettre dans un même canal logique dit canal de synchronisation les moyens d'acquisition et de poursuite de la synchronisation et les informations système destinées à une station utilisateur.

Pour cela, le canal de synchronisation comprend un mot de détection répété (1), et des informations système (2) entre les répétitions du mot de détection. Les informations système subissent un étalement avant d'être transmises sur le canal de synchronisation.

L'invention permet de limiter l'occupation des ressources du système nécessaires pour assurer les fonctions de synchronisation et de diffusion d'informations système.

## Description

La présente invention concerne le domaine des communications par voie hertzienne ou radiocommunications. Elle concerne plus précisément l'acquisition et la poursuite en temps et en fréquence dans les systèmes de radiocommunications. Elle s'applique notamment aux systèmes de radiocommunications cellulaires, aux systèmes de radiocommunications cellulaires par satellites, ou aux autres systèmes de radiocommunication sans fil.

Dans de tels systèmes de radiocommunications, se posent les problèmes de synchronisation des différents terminaux ou stations qui communiquent dans le système, de sorte à permettre une démodulation correcte des signaux transmis. Une station utilisateur, qui ne dispose généralement pas de moyens précis de génération d'horloge, doit acquérir une synchronisation en temps et en fréquence avec une station émettrice, pour pouvoir démoduler les signaux qu'elle reçoit en provenance de cette station émettrice. Il est aussi indispensable qu'une station utilisateur puisse effectuer la poursuite en temps et en fréquence, c'est-à-dire conserver au cours d'une communication la synchronisation en temps et en fréquence lui permettant de continuer à démoduler correctement les signaux qu'elle reçoit.

Ce problème se pose notamment pour les systèmes utilisant une modulation à étalement de spectre, pour lesquels seule l'acquisition de la synchronisation permet la démodulation. Il se pose aussi pour les systèmes de satellites en orbite basse, pour lesquels les satellites assurant la couverture géographique pour une station utilisateur donnée varient.

On définit dans de tels systèmes de radiocommunications des canaux physiques, qui permettent la transmission des informations, et correspondent typiquement à une fréquence de porteuse; ces canaux physiques sont divisés en canaux logiques, par exemple par division temporelle ou par division de code, de sorte à assurer un accès multiple sur un canal physique unique. L'accès multiple à division temporelle (TDMA) et l'accès multiple à division par codes (CDMA) sont connus en soi.

La communication avec les stations utilisateurs dans un système de radiocommunications nécessite en outre la diffusion d'informations système vers les stations, en utilisant un canal logique associé à un canal physique. Ces informations systèmes comprennent par exemple le nom ou le numéro de station de base ("gateway"), ou la localisation géographique en terme de cellule. On parlera dans la suite de diffusion la transmission de telles informations système, et on utilisera le terme trafic pour ce qui concerne le contenu des messages échangés entre les utilisateurs. Le débit des informations système est le plus souvent assez faible par rapport au débit du trafic, et est typiquement de quelques kilobits par seconde.

Une des contraintes dans un tel système de radiocommunications est d'atteindre toutes les stations utilisateurs dans la zone de couverture, y compris celles qui sont le plus défavorisées du point de vue de la propagation. A cette contrainte s'ajoutent les contraintes liées à la limitation des ressources spectrales et de puissance propres à chaque type de système.

Pour remplir ces fonctions d'acquisition et de poursuite de la synchronisation, et de diffusion d'informations système, il a été proposé d'utiliser plusieurs canaux physiques, comme par exemple un canal pilote non modulé à forte puissance, et un autre canal physique pour la diffusion des informations. Le canal pilote non modulé permet un accrochage facile de la station utilisateur sur la fréquence du canal, et une synchronisation en temps. La synchronisation en fréquence est acquise par des méthodes connues en soi, du type transformée de Fourier rapide (FFT). Cette méthode du pilote non modulé est notamment mise en oeuvre dans le système Qualcomm de radiocommunications en CDMA.

Cette solution présente des inconvénients. L'utilisation d'un canal non modulé de forte puissance permet de simplifier la synchronisation en temps, mais provoque une dépense de puissance importante. En outre, l'utilisation d'un canal physique non modulé occupe plusieurs ressources logiques, et peut diminuer la capacité du système. Enfin, cette solution implique un séquencement de procédures assez complexe; il convient d'abord d'acquérir la synchronisation en temps et la synchronisation en fréquence, sur le canal non modulé, puis de passer sur un autre canal logique pour recevoir les informations système et ensuite démoduler les canaux de trafic.

L'invention propose une solution au problème de l'acquisition et de la poursuite de la synchronisation dans un système de radiocommunications. Elle propose en outre une solution au problème de la diffusion d'informations vers les stations utilisateurs.

A l'encontre des solutions connues, l'invention propose d'utiliser un seul canal logique, de préférence sans augmentation de puissance, pour la synchronisation et la poursuite de la synchronisation en temps et en fréquence, et pour la diffusion d'informations système.

Elle permet ainsi d'économiser la puissance dépensée, de limiter l'occupation des ressources - canaux physiques - utilisées pour la synchronisation; elle permet aussi de simplifier les procédures d'acquisition et de poursuite de la synchronisation.

Plus précisément, l'invention propose un canal de synchronisation pour un système de radiocommunications entre une pluralité de stations, comprenant un mot de détection répété sur le canal, et des informations système entre les répétitions du mot de détection.

Avantageusement, les répétitions du mot de détection forment dans le canal un motif périodique, la période du motif étant un sous multiple ou un multiple d'une période de trame du canal.

Le mot de détection peut aussi être répété périodiquement, avec une période sous multiple ou multiple d'une période de trame du canal.

Dans un mode de réalisation préféré de l'invention, les informations système sont transmises sur le canal après étalement.

L'étalement est avantageusement un étalement par modulation M-aire à l'aide d'un code de Hadamard.

De préférence, les informations système sont encodées par un code correcteur d'erreur avant étalement

L'invention concerne aussi un système de radiocommunications, présentant un tel canal de synchronisation.

Le système comprend avantageusement une pluralité de canaux physiques, chaque canal physique comprenant au moins un canal logique ; le canal de synchronisation est alors un canal logique.

De préférence, les canaux logiques sont définis par accès multiple à division par codes.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique de l'allure d'un canal de synchronisation selon l'invention;
- figure 2, une représentation schématique d'un émetteur pour un tel canal;
- figure 3, une représentation schématique d'un récepteur pour un tel canal ;
- figure 4, un graphe de taux d'erreur sur les bits en fonction du rapport signal sur bruit, pour différents écarts en fréquence ;
- figure 5, un graphe de taux d'erreur sur les bits en fonction du rapport signal sur bruit, pour différents types de codes correcteurs d'erreur.

Dans la suite de la description, l'invention est décrite en référence à un système de radiocommunications à satellites en orbite basse et à spectre étalé, avec un accès multiple par division de codes. Elle ne s'applique bien entendu pas qu'à un tel système.

Dans un tel système, sur une même porteuse constituant un canal physique sont multiplexés différents signaux étalés par multiplication par des codes orthogonaux. L'orthogonalité des codes assure que chaque station d'utilisateur peut par multiplication par son propre code, récupérer les signaux qui lui sont destinés.

Chaque code définit un canal logique, qui peut être utilisé pour le trafic ou la diffusion d'information système; on peut définir une trame, qui peut elle-même être divisée en intervalles de temps élémentaires; la taille du code, ou des intervalles de temps, ainsi que les débits correspondants dépendent des caractéristiques de chaque système, et peuvent varier.

L'invention propose d'utiliser pour l'ensemble des fonctions d'acquisition et de poursuite de la synchronisation, et de diffusion des informations système, un canal logique unique, de préférence, sans augmentation de puissance. Dans la suite de la description, le canal correspondant est appelé canal de synchronisation. Dans l'exemple de canaux logiques définis par des codes orthogonaux, comme ci-dessus, on utilise avantageusement un des codes pour définir le canal de synchronisation; pour d'autres types de modulation, le canal de synchronisation correspond à un canal logique, c'est-à-dire à tout ou partie d'une porteuse ou d'un canal physique.

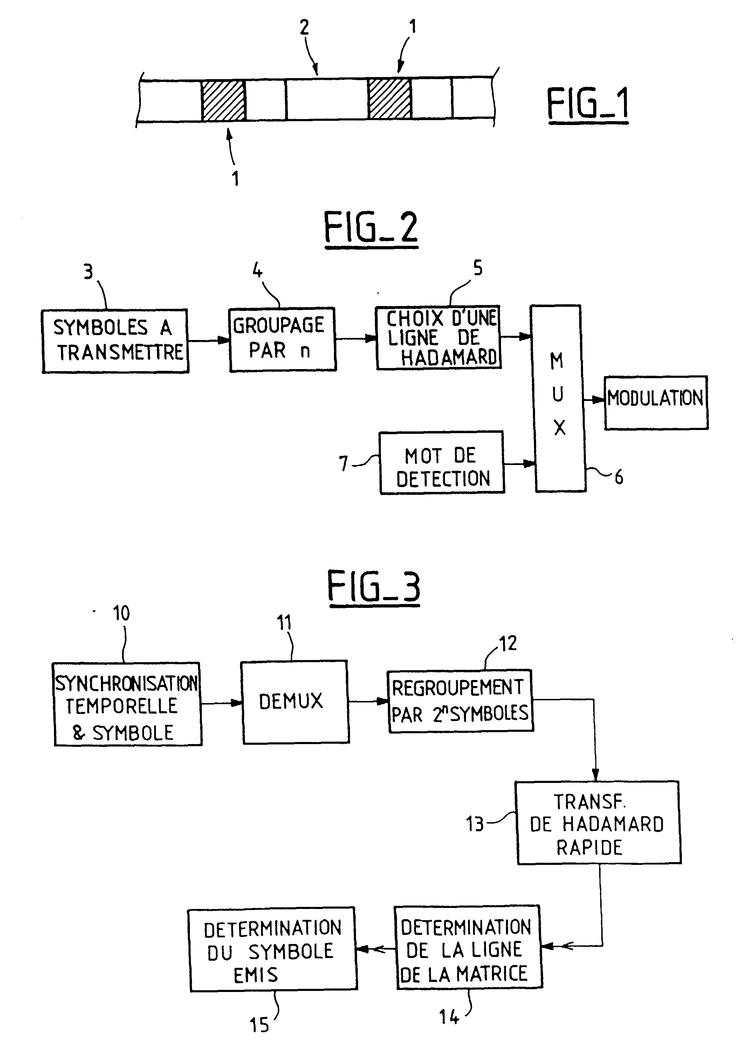

La figure 1 montre l'allure du canal de synchronisation. Comme le montre la figure, un mot de synchronisation 1 est répété sur le canal de synchronisation, avec une périodicité donnée. Entre les répétitions ou occurrences du mot de détection, le canal de synchronisation transporte les informations système 2 diffusées vers les stations utilisateur.

La taille, la structure et la puissance du mot de détection dépendent des caractéristiques du système en cause, et sont choisies de sorte à permettre l'acquisition et le cas échéant la poursuite de la synchronisation par les stations utilisateur. De façon connue en soi, le mot de détection, aussi appelé dans la pratique "mot unique" présente une forte autocorrélation et a une faible probabilité d'apparition dans les messages transmis. Ces propriétés facilitent la détection du mot de détection sur le canal.

La répétition du mot de détection dans le canal de synchronisation permet à une station utilisateur d'acquérir la synchronisation en temps, par reconnaissance du mot détecté dans le canal logique. En outre, la reconnaissance du mot détecté permet à une station utilisateur d'acquérir la synchronisation symbole.

Un choix approprié de la position du ou des mots de détection dans la trame peut aussi permettre d'acquérir à une station utilisateur d'acquérir la synchronisation trame. La répétition du mot de détection s'effectue donc de préférence avec une période correspondant à la période des trames. A l'intérieur d'une trame, la répétition du mot détecté peut être périodique ou non. En d'autres termes, pour permettre une l'acquisition d'une synchronisation trame, les répétitions du mot de détection forment avantageusement dans le canal un motif périodique, dont la période est un sous multiple ou multiple d'une période de trame du canal. Le mot de détection peut aussi n'être répété qu'une seule fois par trame.

Dans le cas le plus simple, le mot de détection est répété périodiquement, avec une période qui est un sous multiple ou un multiple de la période de trame. Une station utilisateur peut alors acquérir la synchronisation symbole et trame par simple reconnaissance du mot de détection.

A titre d'exemple, on considère le cas de canaux logiques, définis par des codes orthogonaux d'une longueur de 128 symboles, avec une trame composée de 24 intervalles de temps d'une longueur unitaire de 424 symboles. Dans ce cas, on peut utiliser un mot de détection d'une longueur de 80 symboles, qui est répété une fois tous les deux intervalles de temps.

Après acquisition de la synchronisation en temps et de la synchronisation symbole et trame, une première estimation de fréquence est possible, par des techniques connues en soi, comme par exemple par la méthode de phase développée.

Entre les occurrences du mot de détection, l'invention propose de diffuser les informations système. On arrive ainsi à transmettre sur un canal logique unique l'ensemble des éléments nécessaires à la synchronisation des stations utilisateurs. L'invention permet ainsi d'éviter de consommer des ressources système, et réduit l'impact des fonctions d'acquisition et de synchronisation sur la capacité de transmission du système. La solution de l'invention permet aussi de faire varier le débit utile des informations système diffusées, sans modifications du spectre.

Avantageusement, les informations système sont transmises sur le canal logique après un étalement, et on transmet à chaque symbole du canal logique non pas un symbole d'information système, mais une bribe (ou "chips" en langue anglaise) résultant de l'étalement des symboles d'information système. Le débit de diffusion, en terme de nombre de symboles d'information système diffusés par seconde, ou débit réel des informations, est alors plus faible; toutefois, l'étalement des informations système reste possible, tout en n'utilisant qu'un seul canal logique, du fait notamment du faible débit des informations système.

Le fait que le débit réel des informations système soit plus faible que le débit nominal de la porteuse permet de combattre des atténuations plus fortes, et de mieux résister aux écarts de fréquence, grâce aussi à la modulation utilisée.

Ce mode de réalisation permet d'augmenter le rapport signal à bruit des symboles d'information système, pour un niveau donné du rapport signal à bruit dans le canal logique. On assure ainsi que même les stations utilisateur les plus défavorisées du point de vue de la propagation reçoivent correctement les informations système; l'invention assure de la sorte une bonne robustesse. L'étalement des symboles d'information système peut s'effectuer par les techniques d'étalement connues en soi, par exemple décrites dans M.K. Simon et autres, Spread spectrum communications, Computer Sciences Press, 1988. La suite de la description donne en référence à la figure 2 un exemple de mise en oeuvre pour des codes de Hadamard en tant que modulation M-aire. L'utilisation de codes de Hadamard pour l'étalement des informations système avant leur diffusion sur le canal de synchronisation entre les mots de détection est particulièrement avantageuse, du fait que la démodulation est non cohérente; ceci augmente la résistance aux variations de phase et de fréquence

On peut prévoir pour les informations système transmises entre les occurrences du mot de détection d'utiliser des codes correcteurs d'erreur. L'implémentation de tels codes est simple.

La figure 2 montre une représentation schématique d'un émetteur pour un canal de synchronisation selon l'invention. L'exemple de la figure utilise une modulation M-aire de Hadamard pour l'étalement des symboles d'information système, et une modulation QPSK ("quaternary phase shift keying", ou en français modulation en décalage de phase à quatre symboles) de la porteuse.

Les symboles d'information système à transmettre - référence 3 sur la figure - sont d'abord regroupés par groupes de n, comme indiqué en 4. En 5, on associe ensuite à chaque groupe de n symboles une ligne de la matrice de Hadamard, i.e. 2ⁿ symboles ou symboles de Hadamard, au débit de la porteuse. La modulation M-aire correspondante constitue un étalement des symboles d'information système à transmettre.

Les symboles de Hadamard obtenus après étalement sont transmis à un multiplexeur 6. Celui-ci reçoit par ailleurs les symboles du mot de détection, voir référence 7 sur la figure. Le multiplexeur 6 effectue le multiplexage des symboles de Hadamard, et des symboles du mot de détection pour obtenir une structure des symboles du genre de celle de la figure 1.

Les symboles d'information système au débit nominal de la porteuse, multiplexés avec les symboles du mot de détection, sont ensuite modulés sur le canal logique. En fonction de la nature du canal logique, et du canal physique, les traitements peuvent alors varier. Dans le cas d'un accès multiple à division par codes, les symboles modulés sur la porteuse sont suréchantillonnés, puis multipliés par la séquence ou le code correspondant au canal, avant d'être envoyés sur le canal physique.

Pour un débit porteuse D, les informations système sont transmises à un débit D.n/2ⁿ sur le canal logique. Il s'agit là du débit instantané, qui ne tient pas compte de la place occupée sur la porteuse par le mot de détection.

On notera que la puissance des mots de détection dans le canal peut être différente de la puissance des informations système transmises. Ceci est notamment le cas si les informations système, comme dans le mode de réalisation décrit, sont transmises après un premier étalement; en effet, dans ce cas, le premier étalement permet d'augmenter le rapport signal à bruit des informations système. Elles peuvent alors être transmises à un niveau plus faible, tout en étant reçues par les stations utilisateurs ayant les conditions de réception les plus mauvaises.

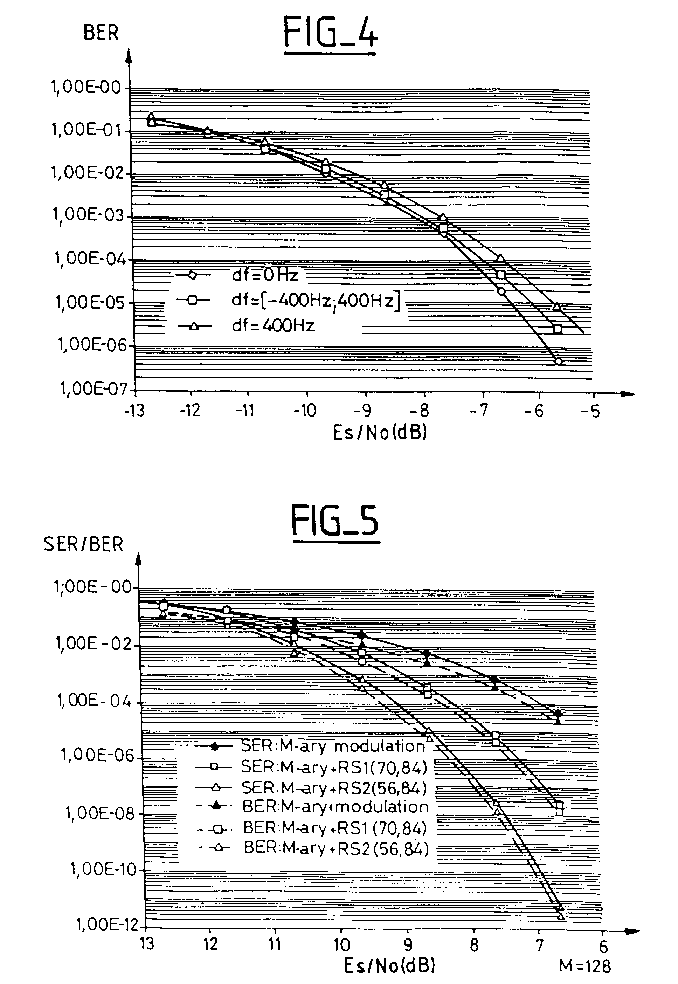

La figure 3 montre une représentation schématique d'un récepteur pour un canal de synchronisation selon l'invention, qui peut fonctionner avec l'émetteur de la figure 2. Les symboles reçus sur le canal logique - dans le cas après le cas échéant l'acquisition d'une synchronisation sur les bribes dans le cas de canaux logiques en CDMA - sont transmis à un bloc 10 d'acquisition de la synchronisation temporelle et de la synchronisation symbole; dans ce bloc 10, le récepteur recherche le mot de détection et procède aussi le cas échéant à la synchronisation de trame. On peut à cet instant procéder à une première estimation de la fréquence, comme expliqué plus haut.

Les symboles sont ensuite démultiplexés, en 1 1, pour séparer l'information système transmise et les mots de détection. L'information système reçue entre les mots de détection au débit nominal du canal est alors regroupée par groupes de 2ⁿ symboles, dans le bloc 12.

On procède ensuite à une transformée de Hadamard rapide des groupes de 2ⁿ symboles, en 13. On détermine ensuite la ligne de la matrice de Hadamard émise, en 14, de sorte à obtenir n symboles d'information émis; on utilise typiquement comme critère le maximum de vraisemblance sur la ligne de la matrice de Hadamard.

La connaissance de la ligne de Hadamard émise, et des 2ⁿ symboles de Hadamard reçus sur la porteuse permet une estimation a posteriori de l'écart en fréquence et de l'écart en phase.

On détermine en 15 les symboles d'information.

Outre la diffusion des informations système aux stations utilisateurs, l'invention permet de la sorte une estimation de l'écart en fréquence et de l'écart en phase. Cette estimation permet d'une part une poursuite du canal physique, de sorte que la station utilisateur reste accrochée sur la fréquence d'émission du canal physique. D'autre part, cette estimation permet une correction de la fréquence et de la phase des signaux reçus sur les autres canaux logiques du même canal physique; l'invention permet de la sorte de regrouper sur un seul canal la fonction d'estimation de l'écart en fréquence et en phase sur un canal physique.

Le suivi des mots de détection permet en outre de maintenir la synchronisation temporelle et la synchronisation symbole de la station utilisateur.

La figure 4 montre un graphe de taux d'erreur sur les bits en fonction du rapport signal sur bruit, pour différents écarts en fréquence ; est porté en abscisses le rapport signal sur bruit E_{S}/N₀, en dB, et en ordonnées le taux d'erreur sur les bits d'information système (BER). La figure correspond au cas d'un étalement de l'information système par une modulation M-aire par codes de Hadamard, avec 2ⁿ = 128. Le graphe en losanges montre les résultats simulés sans écarts en fréquence ; le graphe en carrés montre les résultats simulés pour un écart en fréquence entre - 400 Hz et + 400 Hz, avec une distribution équiprobable entre ces deux valeurs. Le graphe en triangles montre les résultats simulés pour un écart en fréquence de 400 Hz. La figure montre qu'une erreur de fréquence entre -400 Hz et + 400 Hz ne dégrade que faiblement le taux d'erreur sur les bits. Pour un E_{S}/N₀ de -6,8 dB, on ne perd que 0,5 dB.

On n'a pas représenté à la figure le cas d'utilisation d'un code correcteur d'erreur. On peut typiquement utiliser un tel code pour les symboles d'informations, avant l'étalement par le code de Hadamard, auquel cas on procède à la correction dans le schéma de la figure 3 après le bloc 14.

Dans ce cas, on détermine avantageusement l'écart en phase et en fréquence non pas à partir des lignes de Hadamard, mais à partir des symboles d'information système corrigés par application du code correcteur d'erreurs. En fait, on remonte à partir des symboles d'information système corrigés à la ligne de Hadamard émise, et on compare la ligne émise (ou plusieurs lignes) aux symboles effectivement reçus sur la porteuse.

La figure 5 montre un graphe de taux d'erreur sur les bits d'information système (BER) ou sur les symboles obtenus après étalement (SER), en fonction du rapport signal sur bruit, pour différents types de codes correcteurs d'erreur. Les notations sont les mêmes que sur la figure 4. La figure correspond encore au cas d'un étalement de l'information système par une modulation M-aire par codes de Hadamard, avec 2ⁿ = 128. Le graphe en losanges noirs montre le taux d'erreur sur les symboles, et le graphe en triangles noirs le taux d'erreur sur les bits, sans code correcteur d'erreur. Les deux graphes en carrés montrent le taux d'erreur sur les symboles et le taux d'erreur sur les bits, avec un code correcteur d'erreur du type Reed Solomon (70, 84). Les deux graphes en carrés montrent le taux d'erreur sur les symboles et le taux d'erreur sur les bits, avec un code correcteur d'erreur du type Reed Solomon (56, 84). La figure montre que l'utilisation de codes correcteurs d'erreur améliore considérablement les performances du système de transmission.

En termes de probabilité d'erreur, la probabilité d'une erreur de fréquence supérieure à 21 Hz est de l'ordre de 10⁻⁶ pour une modulation des bits d'information système à 128 symboles. Avec une correction d'erreur du type Reed Solomon (8, 12), code raccourci, qui corrige deux erreurs, on atteint une probabilité de l'ordre de 10⁻⁸.

Bien entendu, la présente invention n'est pas limitée aux exemples et modes de réalisation décrits et représentés, mais elle est susceptible de nombreuses variantes accessibles à l'homme de l'art.

Ainsi, dans le mode de réalisation de l'invention décrit plus haut est prévu un étalement des symboles d'information système utilisant des codes de Hadamard; ceci n'est pas indispensable pour la mise en oeuvre de l'invention, et on pourrait aussi utiliser d'autres types de codes ou d'étalement.

L'invention a aussi été décrite dans le cas de canaux logiques définis par des codes orthogonaux (CDMA); elle s'applique aussi à d'autres types d'accès multiples, à division temporelle (TDMA), ou à division fréquentielle (FDMA), ou encore à d'autres définitions des canaux logiques.

Dans le mode de réalisation décrit, l'ensemble du canal de synchronisation est utilisé pour l'acquisition et la poursuite de la synchronisation, et pour la diffusion des informations; on pourrait aussi n'utiliser pour ces fonctions qu'une partie du canal de synchronisation. Dans ce cas, le reste du canal de synchronisation pourrait être utilisé pour le trafic.

## Revendications

1. Un système de télécommunications comprenant une station émettrice et au moins une station utilisateur qui communique via des signaux radioélectriques, comprenant des moyens de transmission et de diffusion pour transmettre des informations système périodiquement sur au moins un canal logique, et pour diffuser, entre lesdites diffusions périodiques d'informations système, des mots de détection sur le même canal logique pour permettre l'acquisition par une station utilisateur d'un canal physique auquel est associé ledit canal logique, caractérisé en ce que lesdites informations système sont étalées par une modulation M-aire à l'aide d'un code de Hadamard avant diffusion, afin de permettre aux stations d'utilisateurs de mieux effectuer la poursuite de la phase et de la fréquence du canal physique auquel est associé ledit canal logique.

2. Système de télécommunications selon la revendication 1, caractérisé en ce que lesdits mots de détection forment dans le canal un motif périodique, la période dudit motif étant un multiple d'une période de trame du canal.

3. Système de télécommunications selon la revendication 1, caractérisé en ce que lesdits mots de détection sont répétés périodiquement, la période de répétition étant un sous multiple d'une période de trame du canal.

4. Système de télécommunications selon la revendication 1, caractérisé en ce que lesdits mots de détection sont répétés périodiquement, la période de répétition étant un multiple d'une période de trame du canal.

5. Système de télécommunications selon l'une quelconque des revendications 1 à 4, caractérisé en ce que lesdites informations système sont encodées par un code correcteur d'erreur avant étalement.

6. Système de télécommunications selon l'une quelconque des revendications 1 à 5, caractérisé en ce qu'il comprend une pluralité de canaux physiques, chaque canal physique comprenant au moins un canal logique, et en ce qu'au moins un des canaux logiques est utilisé comme canal de synchronisation.

7. Système de télécommunications selon la revendication 6, caractérisé en ce que lesdits canaux logiques sont définis par accès multiple à division par codes.

8. Station utilisateur pour un système de télécommunications selon l'une quelconque des revendications 1 à 7, comprenant au moins une partie récepteur comprenant des moyens d'acquisition et de poursuite de la phase et de la fréquence d'un canal physique comprenant au moins un des canaux logiques, caractérisée en ce que ladite station comprend en outre des moyens de démodulation M-aire à l'aide d'un code de Hadamard, et en ce qu'elle effectue la démodulation M-aire afin d'obtenir lesdites informations système diffusées et d'aider à la poursuite de la phase et de la fréquence du canal physique.

9. Station émettrice pour un système de télécommunications selon l'une quelconque des revendications 1 à 7, comprenant des moyens d'émission périodique des mots de détection sur au moins un canal logique, des moyens d'émission des informations système sur ledit au moins un canal logique, caractérisé en ce que ledit émetteur comprend en outre des moyens de modulation, M-aire à l'aide d'un code de Hadamard, des dites informations système.
